# EUROPEAN PATENT SPECIFICATION

(11) **EP 0 686 791 B1**
(45) Date of publication and mention of the grant of the patent: **10.06.1998**
(21) Application number: 95300056.9
(22) Date of filing: 05.01.1995
(51) Int. Cl.: F16J 3/04

(54) **Protective bellows**
Schutzbälge
Soufflets de protection

(30) Priority: 24.02.1994 GB 9403587
(43) Date of publication of application: 13.12.1995
(73) Proprietor: DRAFTEX INDUSTRIES LIMITED, Edinburgh EH2 3AP, Scotland (GB)
(72) Inventor: Breheret, Joel, F-44119 Treillieres (FR); Bouhour, Jean Luc, F-44000 Nantes (FR)
(74) Representative: Foster, David Martyn

(56) References cited:
- EP-A- 0 327 347
- EP-A- 0 545 545
- DE-B- 2 205 798
- FR-A- 2 687 753
- GB-A- 2 166 815

## Description

The invention relates to protective bellows. A protective bellows embodying the invention, and to be described in more detail below by way of example, is for protecting the steering mechanism of a motor vehicle. Protective bellows according to preamble of claim 1 are known from FR-A-2687753 or EP-A-327347.

According to the invention, there is provided a protective bellows for protecting an axially movable member which has an angularly movable end portion, comprising integral fixing means for fixing one end of the bellows to mounting means with respect to which the member is axially movable, and integral fixing means for fixing the other end of the bellows to the angularly movable end portion of the member, characterized in that the bellows incorporates a substantially axially directed skirt portion sized to seat itself and be located on the part of the axially movable member adjacent its junction with the angularly movable end portion, the bellows having a first plurality of bellows turns extending between one fixing means and the skirt portion and a second plurality of bellows turns extending between the skirt portion and the other fixing means, the bellows turns remaining out of contact with the remaining portions of said member and of its end portion.

According to the invention, there is also provided a protective bellows for protecting an axially movable rod member of a steering mechanism which carries a joint connected to a rod end linked to a steerable road wheel of the vehicle, the joint permitting the rod end to move angularly with respect to the axially movable rod member, the bellows comprising a first fixing collar at one of its ends for securing that end to the steering mechanism from which extends the axially movable rod member, a second fixing collar at the other of its ends for securing that end to the angularly movable rod end, and an intermediate generally cylindrically shaped skirt portion which contacts the outside of the joint, the bellows also incorporating a first plurality of bellows turns extending integrally between the first fixing collar and one axial end of the skirt portion and a second plurality of bellows turns extending from the other axial end of the skirt portion to the second fixing collar.

A protective bellows embodying the invention, and for protecting the steering mechanism of a motor vehicle, will now be described, by way of example only, with reference to the accompanying diagrammatic drawings in which:
Figure 1 is a cross-section through a known form of bellows fitted in position on the steering mechanism of the motor vehicle;
Figure 2 corresponds to Figure 1 and shows the configuration which the known bellows of Figure 1 adopts when the steering is turned through a sharp angle (only a half-section of the bellows being shown for simplicity);
Figure 3 is a view corresponding to Figure 1 but showing one form of bellows embodying the invention;
Figure 4 corresponds to Figure 2 and shows the configuration which the bellows of Figure 3 adopts when the steering is turned through the sharp angle;
Figure 5 is a cross-section through part of a modified form of the bellows of Figures 3 and 4;
Figure 6 corresponds to Figure 5 but shows a further modified form of the bellows;
Figure 7 is a view corresponding to part of Figure 4 but showing the addition of means defining an air passage along part of the bellows; and
Figure 8 is a cross-section on the line VIII-VIII of Figure 7.

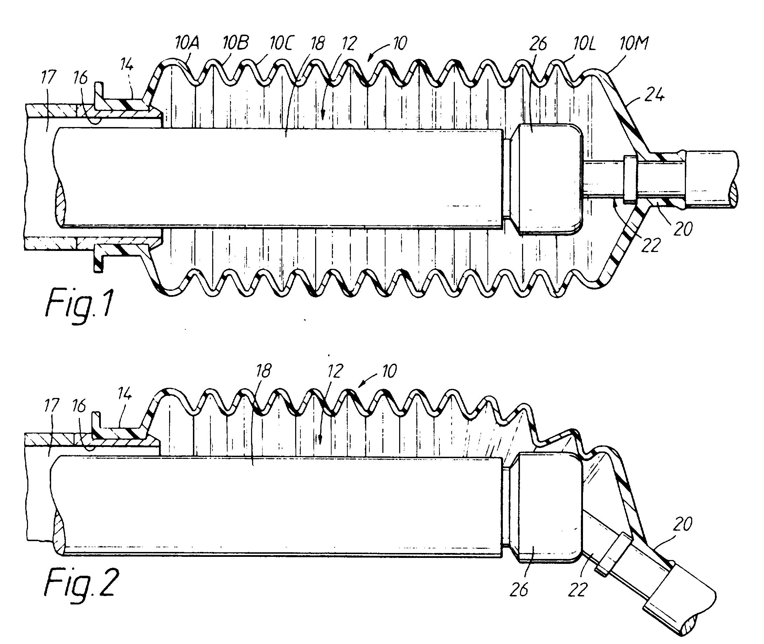

Figure 1 shows a known form of bellows 10 fitted in position on the steering mechanism 12 of a motor vehicle. As shown, the bellows 10 extends between two fixing collars 14 and 20. Fixing collar 14 is secured to a circumferential mounting surface 16 forming the end of a casing 17 of the steering mechanism. Fixing 20 is secured to the end 22 of the steering rod 18 of the steering mechanism. The collars 14 and 20 may be clamped in position by clamping rings not shown. The longitudinal or axial position of the rod 18 is adjusted by the mechanical or hydraulic mechanism within the casing 17 and transmits its movement to one of the front wheels of the vehicle to which it is connected by the rod end 22. The rod end 22 can move angularly relative to the rod 18, being connected to the rod 18 by a joint 26. A similar rod projects from the other end of the casing 17 and is similarly adjusted, and, in turn, adjusts the position of the other front road wheel. A similar bellows is fitted at that end of the casing.

As shown in Figure 1, the bellows 10 comprises a plurality of substantially identical bellows turns 10A,10B,10C...10M which extend from the fixing collar 14 towards the fixing collar 20. However, the final bellows turn 10M is connected to the fixing collar 20 by an extension 24 of this turn, the extension 24 taking account of the difference in diameter between the two fixing collars 14 and 20.

Figure 2 shows the configuration adopted by the known bellows 10 when the rod end 22 is turned through a sharp angle. As indicated, this causes the extension 24 to exert a pull on the adjacent bellows turns 10L and 10M, buckling and distorting them and bringing the troughs of these turns into, or nearly into, contact with the outside of the casing of the joint 26. This buckling and distortion, and partial contact with the end cap 26, is unsatisfactory.

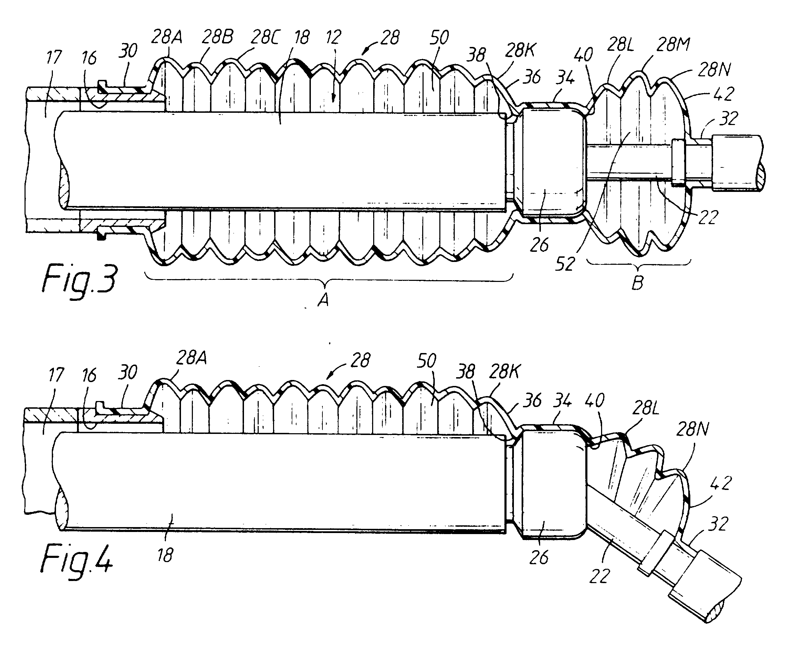

As shown in Figure 3, the bellows 28 embodying the invention has fixing collars 30 and 32 corresponding to the fixing collars 14 and 20 of the bellows of Figures 1 and 2. However, the bellows 28 is arranged in two portions A and B which are integrally interconnected by a skirt portion 34.

The portion A of the bellows is made up of bellows turns 28A,28B,28C.... 28K, the last turn 28K having an extension 36 which is connected to the skirt portion 34 by a trough 38.

The portion B comprises bellows turns 28L,28M and 28N. Bellows turn 28L is connected to the skirt portion 34 by a shallow trough 40. Bellows turn 28N has an extension portion 42 which is connected to the fixing collar 32.

The skirt portion 34 is cylindrical in shape and is sized so as to seat itself on the outside of the casing 26. The troughs 38 and 40 locate the skirt portion on the casing 26 and provide a clamping action.

The number of bellows turns within the portions A and B can be varied as necessary.

The bellows turns 28A... 28K of the portion 28 are arranged so that the peaks of alternate turns have the same diameter as each other but this diameter is different from the diameter of the peaks of the intervening turns. Similarly, the troughs of alternate turns have the same diameter but this diameter is different from the diameter of the intervening turns. Therefore, when the rod 18 moves to the left (as viewed in the Figures) relative to the casing 17, thus compressing the turns 28, the peaks of adjacent turns do not come into contact with each other (because they are of different diameter); similarly, the troughs of adjacent turns do not come into contact with each other. This reduces the pressure generated between adjacent bellows turns.

Figure 4 shows the configuration which the bellows 28 adopts when the rod end 22 is turned through a sharp angle. Because the skirt portion 34 is always in contact with the outside of the joint 26, substantially no distortion or buckling of the bellows occurs. The bellows turns over the portion A are substantially unaffected by the angularity of the rod end 22. The angularity of the rod end 22 is accommodated by the bellows turns in the portion B.

The bellows turns within the portion A are shown as having a cylindrical generatrix. However, instead they may have a slightly conical generatrix. The bellows turns within the portion B can be similarly arranged.

The outer diameter of the bellows turns 28L to 28N is preferably between 0.7 and 1.2 times the outer diameter of the skirt portion 34.

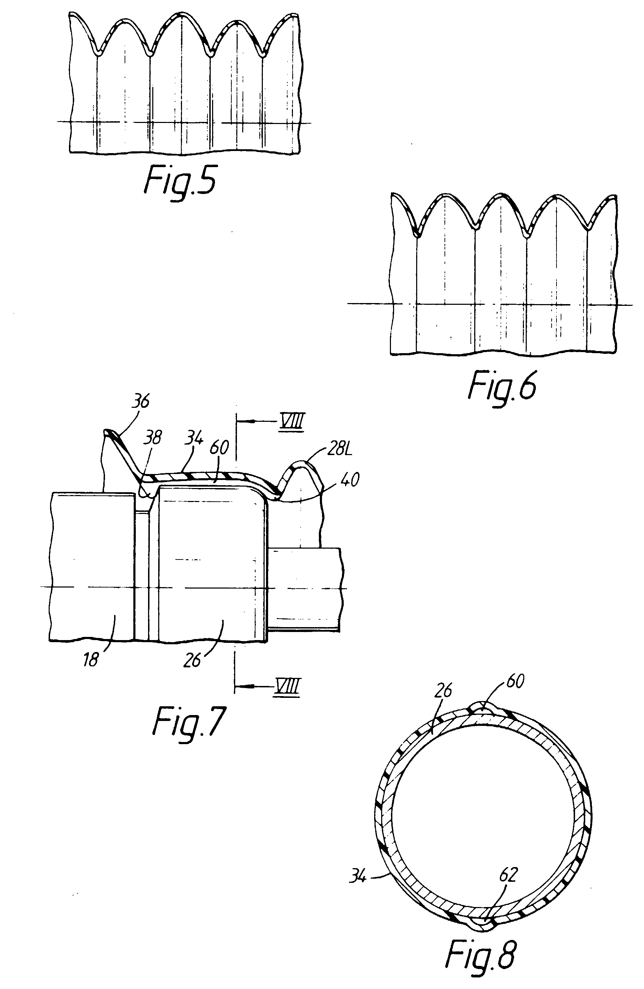

Figures 5 and 6 show different arrangements of bellows turns within the portion 28 of the bellows of Figures 3 and 4. In Figure 5, alternative bellows turns have the same outer diameter but this diameter differs from the outer diameter of the peaks of the intervening turns. However, in contrast to the bellows of Figures 3 and 4, all the troughs have the same diameter. In Figure 6, all the peaks have the same diameter, in contrast to the bellows of Figures 3 and 4, but the troughs of alternate turns have a diameter which differs from the diameter of the intervening turns. The arrangements of Figures 5 and 6 thus provide at least a partial reduction of the pressure which each turn exerts on the next turn during compression of the bellows.

Because the skirt 34 is in contract with the joint 26, the region 50 within the bellows portion A (Figs. 3 and 4) is substantially sealed off and isolated from the region 52 within the bellows portion B. In order to prevent any unsatisfactory build-up of pressure difference between the regions 50 and 52, an air passage 60 (Fig. 7) may interconnect the two regions. Figure 8 shows how the air passage 60 may be produced by forming a groove in the material of the skirt 34. A second groove may be provided to constitute a second air passage 62.

## Claims

1. A protective bellows for protecting an axially movable member (18) which has an angularly movable end portion (22), comprising integral fixing means (30) for fixing one end of the bellows to mounting means (16) with respect to which the member (18) is axially movable, and integral fixing means (32) for fixing the other end of the bellows to the angularly movable end portion (22) of the member (18), characterised in that the bellows incorporates a substantially axially directed skirt portion (34) sized to seat itself and be located on the part (26) of the axially movable member (18) adjacent its junction with the angularly movable end portion (22), the bellows having a first plurality of bellows turns (A) extending between one fixing means (30) and the skirt portion (34) and a second plurality of bellows turns (B) extending between the skirt portion (34) and the other fixing means (32), the bellows turns remaining out of contact with the remaining portions of said member (18) and of its end portion (22).

2. A bellows according to claim 1, characterised in that the skirt portion (34) incorporates at least one radially directed at least partially circumferentially extending formation for locating the skirt portion axially with respect to the said part (26) of the member.

3. A bellows according to claim 1 or 2, characterised in that the axially movable member (18) is a rod member of a steering mechanism which carries a joint connected to a rod end (22) which is linked to a steerable road wheel of a vehicle and which constitutes the angularly movable end portion (22).

4. A bellows according to any preceding claim, characterised by means defining an air passage (60,62) extending between two portions (12,52) within the interior of the bellows which are otherwise separated from each other by contact of the skirt portion (34) with the said part (26) of the member.

5. A bellows according to any preceding claim, characterised in that there is a relatively large number of bellows turns in the first plurality (A) and a relatively small number of bellows turns in the second plurality (B).

6. A bellows according to any preceding claim, characterised in that adjacent bellows turns in the first plurality (A) are differently sized so as to reduce compressive forces acting therebetween when the bellows is longitudinally compressed by axial movement of the said member (18).

7. A bellows according to any of claims 1 to 5, characterised in that the diameter of the peak of each bellows turn in the first plurality (A) differs from the diameter of the peak of the adjacent bellows turn.

8. A bellows according to claim 6 or 7, characterised in that the diameter of the trough of each bellows turn of the first plurality (A) differs from the diameter of the trough of the adjacent bellows turn.

9. A bellows according to any one of claims 6 to 8, characterised in that the diameter of the peak of each bellows turn of the first plurality (A) is substantially the same as the diameter of the peak of the next alternate bellows turn of that plurality.

10. A bellows according to any one of claims 6 to 9, characterised in that the diameter of the trough of each bellows turn of the first plurality (A) is the same as the diameter of the trough of the next alternate bellows turn of that plurality.

## Patentansprüche

1. Schutzbalg zum Schutz eines axial beweglichen Bauteils (18), welches mit einem winkelbeweglichen Endstück (22) versehen ist, mit integrierten Haltemitteln (30) zur Befestigung eines Endes des Balgs an Befestigungsmitteln (16), in Bezug auf die das Bauteil (18) axial beweglich ist, und mit integrierten Haltemitteln (32) zur Fixierung des anderen Endes des Balgs an dem winkelbeweglichen Endstück (22) des Bauteils (18),
dadurch gekennzeichnet,
daß der Balg über einen im wesentlichen axial ausgerichteten Mantelabschnitt (34) verfügt, der so bemessen ist, daß er auf demjenigen Teil (26) des axialbeweglichen Bauteils (18) selbständig sitzt und angeordnet ist, welches benachbart seiner Verbindung mit dem winkelbeweglichen Endstück (22) ist, und daß der Balg eine erste Mehrzahl an Faltungen (A) aufweist, die sich zwischen dem einen Haltemittel (30) und dem Mantelabschnitt (34) erstrecken, und eine zweite Mehrzahl an Faltungen (B), die sich zwischen dem Mantelabschnitt (34) und dem anderen Haltemittel (32) erstrecken, wobei die Faltungen keinen Kontakt zu den verbleibenden Abschnitten des Bauteils (18) und seines Endstücks (22) aufweisen.

2. Schutzbalg nach Anspruch 1, dadurch gekennzeichnet, daß der Mantelabschnitt (34) mindestens eine radial ausgerichtete und zumindest teilweise sich in Umfangsrichtung erstreckende Struktur zur Anordnung des Mantelabschnitts axial bezüglich des Teils (26) des Bauteils beinhaltet.

3. Schutzbalg nach Anspruch 1 oder 2, dadurch gekennzeichnet, daß das axial bewegliche Bauteil (18) eine Stange eines Lenkmechanismus ist, welche eine mit einem Stangenende (22) verbundene Verbindung trägt, wobei das Stangenende (22) an einem lenkbaren Straßenrad eines Fahrzeuges angelenkt ist und das winkelbewegliche Endstück (22) bildet.

4. Schutzbalg nach einem der vorangehenden Ansprüche, gekennzeichnet durch Mittel, welche eine Luftpassage (60, 62) definieren, die sich zwischen zwei Bereichen (12, 25) des Innenraums des Balgs erstrecken, die im übrigen durch das Anliegen des Mantelabschnittes (34) an dem Teil (26) des Bauteils voneinander getrennt sind.

5. Schutzbalg nach einem der vorangehenden Ansprüche, gekennzeichnet durch eine große Anzahl Faltungen (A) der ersten Gruppe im Vergleich zu einer relativ kleinen Anzahl von Faltungen (B) der zweiten Gruppe.

6. Schutzbalg nach einem der vorangehenden Ansprüche, dadurch gekennzeichnet, daß benachbarte Faltungen des Balgs der ersten Gruppe (A) eine abweichende Größe aufweisen, um so die dazwischen wirkenden Druckkräfte zu reduzieren, wenn der Balg in Längsrichtung infolge einer axialen Bewegung des Bauteils (18) zusammengedrückt wird.

7. Schutzbalg nach einem der Ansprüche 1 bis 5, dadurch gekennzeichnet, daß sich der Durchmesser der Erhebung jeder Faltung des Balgs der ersten Gruppe (A) von dem Durchmesser der Erhebung der benachbarten Faltung unterscheidet.

8. Schutzbalg nach einem der Ansprüche 6 oder 7, dadurch gekennzeichnet, daß sich der Durchmesser der Senke jeder Faltung des Balgs der ersten Gruppe (A) von dem Durchmesser der Senke der benachbarten Faltung unterscheidet.

9. Schutzbalg nach einem der Ansprüche 6 bis 8, dadurch gekennzeichnet, daß der Durchmesser der Erhebung jeder Faltung des Balgs der ersten Gruppe (A) im wesentlichen gleich ist dem Durchmesser der Erhebung der nächsten abwechselnden Faltung dieser Gruppe.

10. Schutzbalg nach einem der Ansprüche 6 bis 9, dadurch gekennzeichnet, daß der Durchmesser der Senke jeder Faltung des Balgs der ersten Gruppe (A) gleich ist dem Durchmesser der Senke der nächsten abwechselnden Faltung dieser Gruppe.

## Revendications

1. Soufflet de protection destiné à protéger un élément axialement mobile (18) qui possède une partie d'extrémité angulairement mobile (22), comportant des moyens de fixation d'un seul tenant (30) destinés à fixer une extrémité du soufflet sur des moyens de montage (16) par rapport auquel l'élément (18) est axialement mobile, et des moyens de fixation d'un seul tenant (32) destinés à fixer l'autre extrémité du soufflet sur la partie d'extrémité angulairement mobile (22) de l'élément (18), caractérisé en ce que le soufflet incorpore une partie de jupe dirigée sensiblement axialement (34) dimensionnée afin de reposer d'elle-même et être placée sur la partie (26) de l'élément axialement mobile (18) adjacente à sa jonction avec la partie d'extrémité angulairement mobile (22), le soufflet ayant une première multiplicité de plis de soufflet (A) qui s'étendent entre les premiers moyens de fixation (30) et la partie de jupe (34) et une deuxième multiplicité de plis de soufflet (B) qui s'étendent entre la partie de jupe (34) et les autres moyens de fixation (32), les plis de soufflet restant hors de contact avec les parties restantes dudit élément (18) et de sa partie d'extrémité (22).

2. Soufflet selon la revendication 1, caractérisé en ce que la partie de jupe (34) incorpore au moins une formation s'étendant au moins partiellement circonférentiellement et dirigée radialement afin de positionner la partie de jupe axialement par rapport à ladite partie (26) de l'élément.

3. Soufflet selon la revendication 1 ou 2, caractérisé en ce que l'élément axialement mobile (18) est un élément de barre d'un mécanisme de direction qui porte un joint relié à une extrémité de biellette (22) qui est reliée à une roue directrice d'un véhicule et qui constitue la partie d'extrémité angulairement mobile (22).

4. Soufflet selon l'une quelconque des revendications précédentes, caractérisé par des moyens définissant un passage d'air (60, 62) s'étendant entre deux parties (12, 52) à l'intérieur du soufflet qui sont par ailleurs séparées l'une de l'autre par le contact de la partie de jupe (34) avec ladite partie (26) de l'élément.

5. Soufflet selon l'une quelconque des revendications précédentes, caractérisé en ce qu'il y a un relativement grand nombre de plis de soufflet dans la première multiplicité (A) et un relativement faible nombre de plis de soufflet dans la deuxième multiplicité (B).

6. Soufflet selon l'une quelconque des revendications précédentes, caractérisé en ce que des plis de soufflet adjacents dans la première multiplicité (A) sont dimensionnés de façon différente afin de réduire des forces de compression agissant entre elles lorsque le soufflet est comprimé longitudinalement par un mouvement axial dudit élément (18).

7. Soufflet selon l'une quelconque des revendications 1 à 5, caractérisé en ce que le diamètre du sommet de chaque pli de soufflet dans la première multiplicité (A) diffère du diamètre du sommet du pli de soufflet adjacent.

8. Soufflet selon la revendication 6 ou 7, caractérisé en ce que le diamètre du creux de chaque pli de soufflet de la première multiplicité (A) diffère du diamètre du creux du pli de soufflet adjacent.

9. Soufflet selon l'une quelconque des revendications 6 à 8, caractérisé en ce que le diamètre du sommet de chaque pli de soufflet de la première multiplicité (A) est sensiblement le même que le diamètre du sommet du pli de soufflet alterné suivant de cette multiplicité.

10. Soufflet selon l'une quelconque des revendications 6 à 9, caractérisé en ce que le diamètre du creux de chaque pli de soufflet de la première multiplicité (A) est le même que le diamètre du creux du pli de soufflet alterné suivant de cette multiplicité.
